# EUROPÄISCHE PATENTSCHRIFT

(11) **EP 1 965 997 B1**
(45) Veröffentlichungstag und Bekanntmachung des Hinweises auf die Patenterteilung: **17.02.2010**
(21) Anmeldenummer: 06846955.0
(22) Anmeldetag: 21.12.2006
(51) Int. Cl.: B60J 7/22, B60J 10/12

(54) **WINDABWEISER IM KRAFTFAHRZEUGBEREICH**
WIND DEFLECTOR IN MOTOR VEHICLES
DEFLECTEUR D'AIR POUR VEHICULE AUTOMOBILE

(30) Priorität: 30.12.2005 DE 102005063098; 20.03.2006 DE 102006012644
(43) Veröffentlichungstag der Anmeldung: 10.09.2008
(73) Patentinhaber: Webasto AG, 82131 Stockdorf (DE)
(72) Erfinder: BERGMILLER, Alexander, 86343 Koenigsbrunn (DE)
(86) Internationale Anmeldenummer: PCT/DE2006/002325
(87) Internationale Veröffentlichungsnummer: WO 2007/076836

(56) Entgegenhaltungen:
- EP-A- 0 385 263
- DE-A1- 10 210 142
- DE-A1- 10 246 753
- DE-B3-102004 026 834
- DE-C1- 4 444 630

## Beschreibung

Die vorliegende Erfindung bezieht sich auf Windabweiser im Kraftfahrzeugbereich.

Obwohl auf beliebige Bereiche eines Kraftfahrzeuges anwendbar, werden die vorliegende Erfindung sowie die ihr zugrunde liegende Problematik in Bezug auf ein Schiebedach eines Kraftfahrzeuges näher erläutert. Der vorliegende Erfindungsgedanke ist aber beispielsweise auch auf Fenster, Sonnendächer oder Panoramadächer eines Fahrzeuges anwendbar.

Ein allgemein bekanntes Problem bei einem KraftfahrzeugSchiebedach besteht darin, dass es bei geöffnetem Deckel zu periodischen Druckschwankungen im Inneren des Fahrzeuges kommen kann, wenn sich das Fahrzeug mit niedrigen bis mittleren Geschwindigkeiten bewegt. Diese periodischen Druckschwankungen machen sich allgemein als störendes akustisches Geräusch, z. B. als so genanntes Wummern, bemerkbar. Zur Vermeidung dieser Druckschwankungen werden im Allgemeinen Windabweiser verwendet.

Ein Windabweiser hat die Funktion, die Strömungsverhältnisse des Kraftfahrzeuges zu verbessern, wenn sich beispielsweise der Deckel eines Schiebedachs in einer geöffneten Stellung befindet. Der Windabweiser ist üblicherweise an dem in Fahrtrichtung gesehen vorderen Ende der vom Schiebedeckel freigegebenen Dachöffnung angeordnet und wird aus einer eingefahrenen Stellung, in der er sich unterhalb der Außenfläche des Fahrzeugdaches befindet, in eine ausgestellte Stellung überführt, wenn der Deckel geöffnet wird.

Herkömmliche Windabweiser weisen ein bügelförmiges Basiselement und ein darüber angeordnetes bügelförmiges Ausstellelement, zwischen welchen ein Abweisernetz aufspannbar ist, auf, wie in der DE 102 10 142 A1 beschrieben. Häufig werden solche Windabweiser mittels eines in seitlichen Bereiches des bügelförmigen Ausstellelementes und am Dachöffnungsrahmen angebrachten aktiven Steuerungsmechanismus entlang einer vorgegebenen Kurvenbahn zeitgleich mit der Öffnungsbewegung des Schiebedachdeckels bewegt. Während des Öffnungsvorgangs findet nach der anfänglichen Nachobenbewegung und der nach vorne gerichteten leichten Schwenkbewegung des Deckels ein Nachhintenschieben des Schiebedeckels entlang einer relativ langen Wegstrecke der seitlichen Bereiche des bügelförmigen Ausstellelements statt. Das Ausstellelement kann erst dann vollständig ausgestellt werden, also vollständig nach oben verschwenkt werden, wenn es von einer fahrzeugvorderseitigen Kante des Schiebedachdeckels während des Öffnungsvorgangs überfahren wurde. Dieser Steuerungsmechanismus hat zur Folge, dass während dieses Öffnungsvorganges ein spaltartiger Zwischenraum zwischen der Unterseite des Schiebedachdeckels und einem in Fahrzeugquerrichtung verlaufenden Teils des Windabweisers, der eine Spaltbreite von ca. 5 mm aufweist, entsteht. Dieser spaltartige Zwischenraum verursacht unerwünschte Windgeräusche und Zugluft im Fahrzeuginnenraum.

Ein Ansatz, um diesem Problem abzuhelfen, ist in der DE 10 2004 026 834 B3. Ein Ausstellelement weist hier oberseitig ein linienförmiges, flexibles Element zur Abdichtung des spaltartigen Zwischenraums während des Öffnungs- oder Schließvorgangs des Schiebedachdeckels auf. Dabei ist ein aufspannbares Abweisernetz an dem Ausstellelement befestigt. Die Befestigung erfolgt herkömmlich durch Kederelemente, die an einem Rand des Abweisernetzes befestigt sind, und in eine Nut in dem Ausstellelement eingeführt werden. Der Montageprozess für die Kederelemente gestaltet sich sehr aufwändig, weil jedes der Kederelemente einzeln positioniert und in die Nut eingeführt wird. Eine Automatisierung dieses Prozesses lässt sich nur schwer erreichen. Dies führt zu hohen Stückkosten und langen Montagezeiten solcher Windabweiser.

Vor diesem Hintergrund ist es eine Aufgabe der vorliegenden Erfindung, eine bessere und insbesondere montagetechnisch vereinfachte Anbindung eines Abweiserelements an ein Ausstellelement bereitzustellen.

Erfindungsgemäß wird diese Aufgabe durch einen Windabweiser mit den Merkmalen des Patentanspruchs 1 und/oder ein Verfahren mit den Merkmalen des Patentanspruchs 12 gelöst.

Demgemäß ist ein Windabweiser für eine mittels eines beweglichen Dachteils verschließbare und teilweise freigebbare Dachöffnung eines Fahrzeuges, mit einem bügelförmigen Basiselement, welches in einem Dachöffnungsrandbereich des Fahrzeugs angebracht ist, mit einem über dem Basiselement angeordneten bügelförmigen Ausstellelement, welches schwenkbar zu dem Basiselement angebracht ist, mit einem zwischen dem Basiselement und dem Ausstellelement angeordneten aufspannbaren Abweiserelement, mit wenigstens einem an dem Ausstellelement befestigten Dichtelement zur Reduzierung von Fahrgeräuschen, wobei das Abweiserelement direkt an dem Dichtelement befestigt ist, vorgesehen.

Weiterhin wird ein Verfahren zur Montage eines erfindungsgemäßen Windabweisers bereitgestellt, wenigstens aufweisend ein Verbinden des Abweiserelements mit dem Dichtelement durch Nähen und/oder Kleben und/oder Verschweißen und/oder Verklemmen und/oder Anspritzen des Dichtelements an den Windabweiser.

Somit weist die vorliegende Erfindung gegenüber den bekannten Ansätzen gemäß dem Stand der Technik den Vorteil auf, dass durch die direkte Befestigung des Abweiserelements an der Dichtung sowohl der Montageaufwand reduziert werden kann als auch Bauteile eingespart werden können. Durch die Erfindung entfallen nämlich die Kederelemente zur Befestigung des Abweiserelements an dem Ausstellelement. Ferner entfällt die aufwändige Montage der Kederelemente. Eine automatisierte Montage des Abweiserelements an der Dichtung und ein Anbringen der Dichtung an dem Ausstellelement ist gegenüber dem Anbringen von Kederelementen an dem Abweiserelement sowie die Einführung der Kederelemente in eine Nut an dem Ausstellelement einfach zu realisieren, was zu einer Senkung der Montagekosten führt.

In den Unteransprüchen finden sich vorteilhafte Ausgestaltungen und Verbesserungen des erfindungsgemäßen Windabweisers bzw. des Verfahrens zu dessen Herstellung.

Gemäß einer bevorzugten Weiterbildung ist das Dichtelement mit dem Abweiserelement durch eine Naht und/oder einen Klebstoff und/oder eine Schweißnaht und/oder eine Klemmverbindung und/oder einen Stoffschluss durch Anspritzen des Dichtelements verbunden. Eine solche Anbindung des Abweiserelements lässt sich montagetechnisch einfach, insbesondere auch automatisiert, durchführen. Ferner kann eine zuverlässige Verbindung zwischen dem Abweiserelement und dem Dichtelement bereitgestellt werden.

Bei einer weiteren Ausbildung der Erfindung ist das Dichtelement als eine Profildichtung ausgebildet. Solche Dichtungen sind in ihrer Form an den abzudichtenden Spalt optimal anpassbar. Insbesondere kann die Dichtung einen offenen Abschnitt und/oder einen geschlossenen Abschnitt bedarfsgerecht aufweisen. Bevorzugt weist das Dichtelement Moosgummi und/oder EPDM (Ethylen-Propylen-Dien-Kautschuk) und/oder Silikon auf. Solche Materialien weisen hohe Dämpfungseigenschaften auf und könnten daher Klappergeräusche zwischen dem Ausstellelement und dem beweglichen Dachteil verhindern.

Gemäß einer weiterhin bevorzugten Ausführungsform steht das Dichtelement bei geschlossener Dachöffnung und/oder teilweise freigegebenen Dachöffnung mit dem beweglichen Dachteil wenigstens teilweise abdichtend in Kontakt und/oder bildet eine vibrationsdämpfende Einrichtung zwischen dem Ausstellelement und dem beweglichen Dachteil aus. Dies erlaubt eine effektive Reduzierung von Fahrtwindgeräuschen und Klappergeräuschen zwischen dem Ausstellelement und dem beweglichen Dachteil.

In eine weiterhin bevorzugten Weiterbildung ist das Dichtelement bei wenigstens teilweise freigegebener Dachöffnung mit einem vorderen Dachflansch eines Dachrandes in Kontakt bringbar und das Dichtelement ist derart ausgebildet, dass der Dachrand bei wenigstens teilweise freigegebener Dachöffnung geräuscharm von dem Fahrtwind überströmt ist. Eine optimierte Überströmung des Randes der Dachöffnung kann zu einer weiteren Reduzierung der Fahrtwindgeräusche führen.

Gemäß einer weiteren bevorzugten Weiterbildung der Erfindung ist das Ausstellelement mit dem Dichtelement durch einen Klebstoff und/oder durch einen Stoffschluss mittels Anspritzen des Dichtelements und/oder durch eine Steckverbindung und/oder durch eine Klemmverbindung und/oder durch eine Spreizverbindung und/oder durch eine Klammerverbindung und/oder durch eine Rastverbindung verbunden. Die lösbaren Verbindungen weisen den Vorteil auf, dass sie eine einfache Demontage des Abweiserelements an dem Ausstellelement ermöglichen. Eine permanente Verbindung zwischen dem Abweiserelement und der Dichtung bringt den Vorteil mit stich, dass meist eine einfachere Montage möglich ist.

Vorzugsweise ist das Ausstellelement als ein Profilteil ausgebildet. Dies gewährleistet eine hohe Stabilität und Verwindungssteifigkeit des Ausstellelements im Fahrtwind. Insbesondere ist eine Ausbildung eines Ausstellelements als Kunststoffprofilteil und/oder Aluminiumstrangpressprofilteil und/oder Magnesiumdruckgussteil vorteilhaft, weil diese eine hohe Korrosionsbeständigkeit besitzen und einfach in ihrer Herstellung sind.

In einer weiteren vorteilhaften Ausbildung der Erfindung ist das Abweiserelement als Gewebe und/oder luftdurchlässige Folie ausgebildet. Diese dient der Reduzierung der Wummergeräusche im Fahrzeug.

Ferner ist ein Verfahren zur Montage des Windabweisers, wenigstens aufweisend ein Verbinden des Abweiserelements mit dem Dichtelement durch Nähen und/oder Kleben und/oder Verschweißen und/oder Verklemmen und/oder Anspritzen des Dichtelements an den Windabweiser durch die Erfindung bereitgestellt. Ein solcher Montageprozess lässt sich montagetechnisch, insbesondere auch automatisiert, einfach durchführen.

Die Erfindung wird nachfolgend anhand der in den schematischen Figuren der Zeichnung dargestellten Ausführungsbeispiele näher erläutert. Es zeigen dabei:
- Figur 1A: eine Aufsicht eines allgemeinen Aufbaus eines erfin- dungsgemäßen Windabweisers;
- Figur 1B: einen Teilschnitt A-A aus Figur 1A;
- Figur 2A: einen Teilschnitt durch ein erstes Ausführungsbei- spiel gemäß dem erfindungsgemäßen Windabweiser;
- Figur 2B: einen Teilschnitt durch ein zweites Ausführungsbei- spiel gemäß dem erfindungsgemäßen Windabweiser;
- Figur 3: einen Teilschnitt durch ein drittes Ausführungsbei- spiel gemäß dem erfindungsgemäßen Windabweiser.
- Figur 4A: einen Schnitt durch eine Gussvorrichtung eines Aus- führungsbeispiels eines erfindungsgemäßen Verfahrens;
- Figur 4B: einen Teilschnitt durch ein Ausführungsbeispiel eines erfindungsgemäßen Windabweisers, hergestellt gemäß dem erfindungsgemäßen Verfahren.

In allen Figuren der Zeichnung sind gleiche bzw. funktionsgleiche Elemente - sofern nichts Anderes angegeben ist - mit jeweils denselben Bezugszeichen versehen worden.

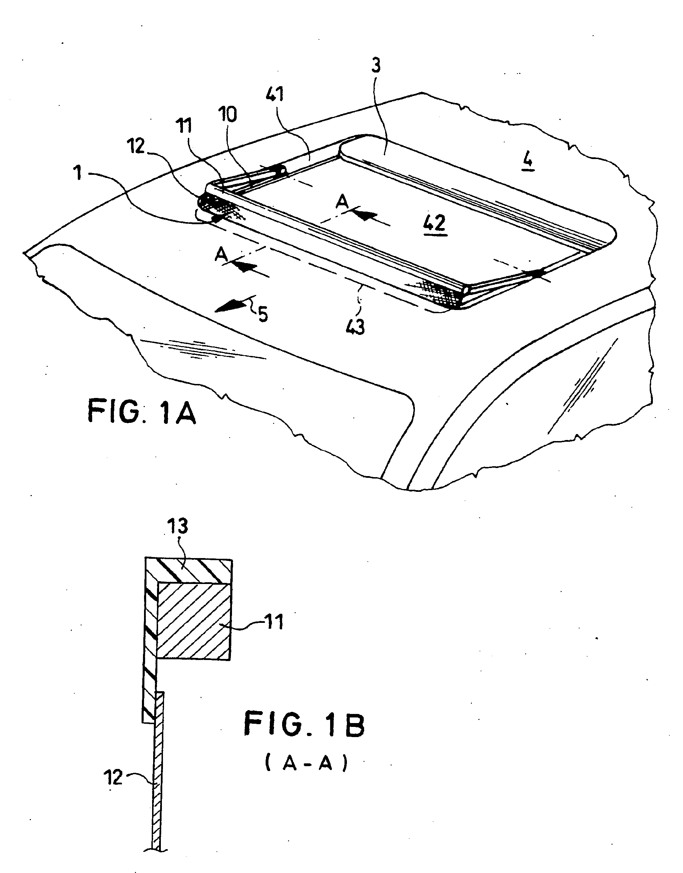

Figur 1A und Figur 1B zeigen schematisch Aufsicht bzw. einen Teilschnitt (A-A) eines allgemeinen Aufbaus eines erfindungsgemäßen Windabweisers 1. Der Windabweiser 1 ist in einem Dach 4 eines Kraftfahrzeuges angeordnet. Das Fahrzeug bewegt sich dabei in die mit dem Pfeil 5 gekennzeichnete Richtung. Das Dach 4 weist eine Dachöffnung 42, welche mittels eines beweglichen Dachteils 3 verschließbar und teilweise freigebbar ist, auf. Der Windabweiser 1 besitzt ein bügelförmiges Basiselement 10, welches in einem Dachöffhungsrandbereich 41 des Daches 4 angebracht ist. Das Basiselement 10 ist über einem bügelförmigen Ausstellelement 11, welches schwenkbar zu dem Basiselement 10 angebracht ist, angeordnet. Zwischen dem Basiselement 10 und dem Ausstellelement 11 ist ein aufspannbares Abweiserelement 12 angeordnet. An dem Ausstellelement 11 ist ein Dichtelement 13 befestigt, welches zur Reduzierung von Fahrgeräuschen vorgesehen ist. Das Abweiserelement 12 ist direkt an dem Dichtelement 13 befestigt.

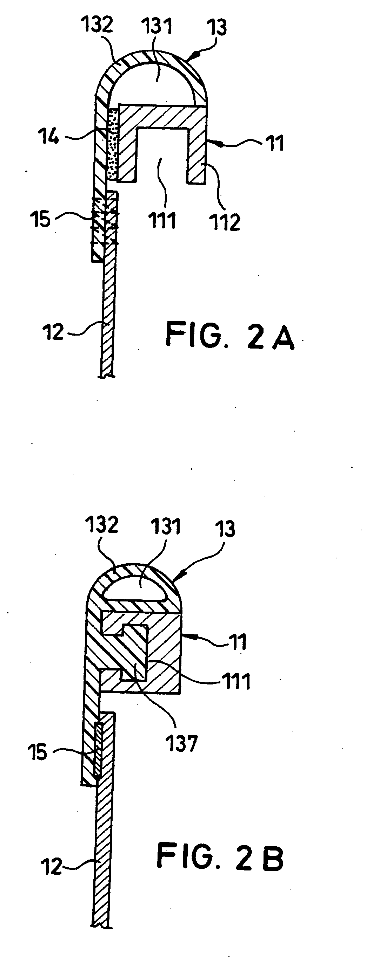

Figur 2A zeigt einen Teilschnitt gemäß einem ersten Ausführungsbeispiel des erfindungsgemäßen Windabweisers 1. Die Dichtung 13 ist als Dichtlippe ausgebildet und mittels eines Klebstoffs 14 an einem Aluminiumprofil 11, das eine Ausnehmung 111 aufweist, befestigt. Die Dichtung 13 bildet dabei den Hohlraum 131 zusammen mit dem Aluminiumprofilteil 11. Das Windabweiser Abweisernetz 12 ist mittels eines Textilfadens 15 an der Dichtung 13 befestigt.

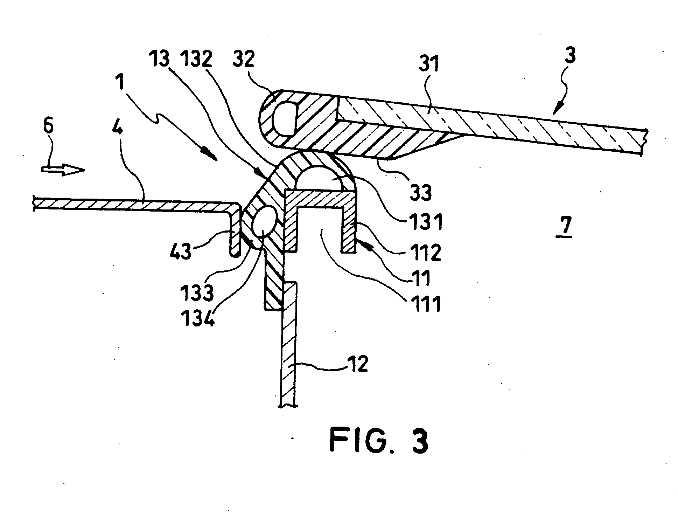

Bei wenigstens teilweise geöffnetem Schiebedeckel 3 liegt die Dichtung 13 mit ihrer Oberfläche 132 an der Unterseite 33 des Schiebedeckels 3 (siehe Figur 3) abdichtend an. Teilweise abdichtend bedeutet hier einen Abstand zwischen der Oberfläche 132 der Dichtung 13 und der Unterseite 33 des Schiebedeckels 3 im Bereich 0 bis wenige Millimeter. Dabei nimmt die Dichtung 13 Vibrationen zwischen dem Ausstellelement 11 und dem Schiebedeckel 3 auf.

Figur 2B zeigt einen Teilschnitt durch ein zweites Ausführungsbeispiel des erfindungsgemäßen Windabweisers 1. Das Dichtelement ist als geschlossene Profildichtung 13 mit Hohlraum 131 und Zapfen 111 ausgebildet. Die Profildichtung 13 ist an dem Ausstellelement 11, das als Kunststoffprofilteil ausgebildet ist, durch Einschieben des Zapfens 111 in die Nut 116 befestigt. Die Dichtung 13 ist mittels einer Ultraschallschweißnaht 15 an dem als luftdurchlässige Folie ausgebildeten Abweiserelement 12 befestigt. Vorteilhaft bei dieser Ausführungsform der Erfindung ist, dass die Dichtung 13 mit dem Ausstellelement 111 lösbar verbunden ist, und somit ein leichtes Austauschen des Abweiserelements, im Falle einer Beschädigung des Abweiserelements, ermöglicht. Ein Verbinden durch Kleben ist prozesstechnisch einfacher und schneller durchzuführen. Ultraschallschweißen eignet sich deshalb besonders gut, weil es ein sehr schneller Prozess, im Vergleich z. B. zu Annähen mittels eines Textilfaden ist.

Figur 3 zeigt einen Teilschnitt durch ein drittes Ausführungsbeispiel des erfindungsgemäßen Windabweisers 1 im Bereich dessen vorderen Dachflanschs 43. Die Dichtung 13 unterteilt sich in einen Bereich 132 einer offenen Dichtung (Dichtlippe), die den Hohlraum 131 mit Ausstellelement 11 bildet. Weiterhin weist die Dichtung 13 einen weiteren Bereich 133, der als geschlossene Dichtung mit einem weiteren Hohlraum 134 ausgebildet ist. Der Schiebedeckel 3 befindet sich in einer leicht geöffneten Stellung und weist einen Glasdeckel 31, eine Dichtung 32 sowie eine Unterseite 33 auf. Ein Fahrtwind 6 strömt über das Dach 4 über den Flansch 43 und wird durch den Bereich 132 der Dichtung 13, der sich in Kontakt mit der Schiebedeckelunterseite 33 befindet, an einem Einströmen in den Fahrgastraum 7 gehindert. Der weitere Bereich 133 der Dichtung 13 liegt abdichtend an dem Dachflansch 43 an und begünstigt somit ein geräuscharmes Überströmen des Dachflanschs 43.

Auch bei geschlossener Stellung des Schiebedeckels 3 verhindert die Dichtung 13 eine Geräuschentwicklung bedingt durch Vibration zwischen dem Ausstellelement 11 und dem Schiebedeckel 3 mittels ihrer dämpfenden Charakteristika.

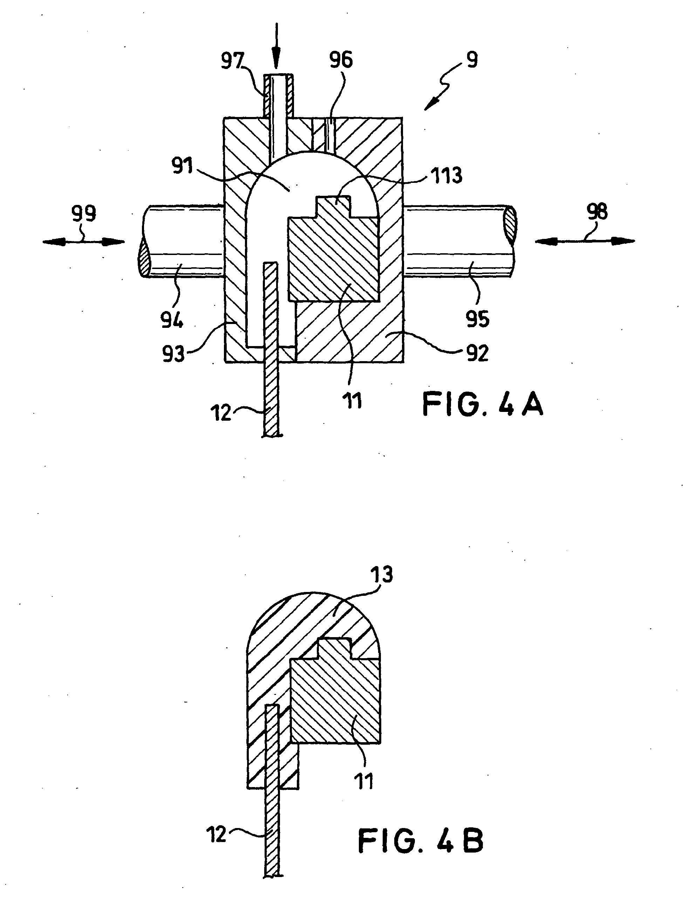

Figur 4A zeigt einen Schnitt durch eine Gießvorrichtung eines Ausführungsbeispiels eines erfindungsgemäßen Verfahrens. Die Gießvorrichtung 9 weist zwei gegenüberliegend angeordnete Gießformen 92, 93, die jeweils an linear bewegbaren (Bezugszeichen 99, 98) Kolben 94, 95 angeordnet sind, auf. Ferner weist die Gießvorrichtung eine Zuführung von einem flüssigen Dichtungsmaterial, beispielsweise EPDM, auf. Der Hohlraum 91 wird über die Entlüftung 96 entlüftet. Das Ausstellelement 11 und ein Randabschnitt des Abweiserelements 12 sind innerhalb der Gießvorrichtung angeordnet. Zu Beginn des Herstellungsprozesses werden das Ausstellelement 11 und das Ende des Abweiserelements 12 in den geöffneten Gießformen 92, 93 positioniert. Anschließend werden die Gießformen 92, 93 mittels der Kolben 94, 95 abdichtend zusammengepresst. Daraufhin wird ein Dichtungsmaterial über die Zuführung 97 in den Hohlraum 91 eingespritzt. Luft, die im Hohlraum 91 vorhanden ist, kann über die Entlüftung 96 abgeführt werden. Am Ende des Gießprozesses öffnen sich die Gießformen 92, 93 und das Produkt dieses Gießprozesses wird entnommen.

Figur 4B zeigt einen Teilschnitt durch ein Ausführungsbeispiel eines erfindungsgemäßen Windabweisers, hergestellt gemäß dem Verfahren aus Figur 4A. Das Dichtelement 13 ist mit dem Ausstellelement 11 und dessen Zapfen 113 sowie mit dem Abweiserelement 12 verbunden.

Die Erfindung ist nicht auf den in den vorstehenden Figuren dargestellten, speziellen Aufbau eines Windabweisers sowie dessen Herstellungsverfahren beschränkt.

In einer weiteren möglichen und ebenfalls vorteilhaften Ausgestaltung der Erfindung erstreckt sich das Abweiserelement über die gesamte Länge des bügelförmigen Basiselements und Ausstellerelements. In einem solchen Fall, in dem sich das Abweiserelement um die Krümmungen des Ausstellelements und/oder des Basiselements zieht, kann die auf der Oberseite des Ausstellelements angeordnete Dichtung teilweise beschnitten werden, in dem Fall, dass sie die Funktionsweise des Windabweisers oder des Schiebedachs behindert.

Ferner ist die hier beschriebene Ausgestaltung des Ausstellelements auch beispielsweise auf das Basiselement anwendbar. Dabei ist das Basiselement mit dem Abweiserelement auf identische Weise, wie das Abweiserelement mit dem Ausstellelement gemäß dieser Erfindung, verbunden.

Das Verfahren zur Herstellung des Abweiserelements kann auf vielfältige Art variiert werden. Beispielsweise kann die Dichtung zunächst an dem Ausstellerelement befestigt werden und in einem weiteren Schritt das Abweiserelement an der Dichtung befestigt werden.

Das Verfahren zur Herstellung des Abweiserelements ist bevorzugt auch als Druckgussverfahren ausgestaltet.

### Bezugszeichenliste

- 1: Windabweiser
- 10: Basiselement
- 11: Ausstellelement
- 111: Nut
- 112: Profil
- 113: Zapfen
- 12: Abweiserelement
- 13: Dichtungselement
- 131: Hohlraum des Dichtelements
- 132: Bereich des Dichtelements
- 133: weiterer Bereich des Dichtelements
- 134: weiterer Hohlraum des Dichtelements
- 137: Zapfen des Dichtelements
- 14: Klebstoff
- 15: Anbindung
- 3: beweglicher Dachteil
- 31: Glasdeckel
- 32: Schiebedeckeldichtung
- 33: Unterseite des Schiebedeckels
- 4: Dach
- 41: Dachrandbereich
- 42: Dachöffnung
- 43: vorderer Dachflansch
- 5: Bewegungsrichtung des Fahrzeuges
- 6: Fahrtwind
- 7: Innenraum des Fahrzeuges
- 9: Gießvorrichtung
- 91: Hohlraum
- 92,93: Gießformen
- 94,95: Kolben
- 96: Entlüftung
- 97: Zufuhr für Schmelze
- 98,99: Bewegungsrichtung der Kolben

## Patentansprüche

1. Windabweiser (1) für eine mittels eines beweglichen Dachteils (3) verschließbare und teilweise freigebbare Dachöffnung (42) eines Fahrzeugs
- mit einem bügelförmigen Basiselement (10), welches in einem Dachöffnungsrandbereich (41) des Kraftfahrzeugs angebracht ist,
- mit einem über dem Basiselement (10) angeordneten bügelförmigen Ausstellelement (11), welches schwenkbar zu dem Basiselement (10) angebracht ist,
- mit einem zwischen dem Basiselement (10) und dem Ausstellelement (11) angeordneten aufspannbaren Abweiserelement (12), das als Gewebe und/oder luftdurchlässige Folie ausgebildet ist,
- mit wenigstens einem an dem Ausstellelement (11) befestigten Dichtelement (13) zur Reduzierung von Fahrgeräuschen,
**dadurch gekennzeichnet, dass** das Abweiserelement (12) direkt an dem Dichtelement (13) befestigt ist.

2. Windabweiser nach Anspruch 1,
**dadurch gekennzeichnet, dass** das Dichtelement (13) mit dem Abweiserelement (12) durch eine Naht und/oder einen Klebstoff und/oder eine Schweißnaht und/oder eine Klemmverbindung und/oder einen Stoffschluss durch Anspritzen des Dichtelements (13) verbunden ist.

3. Windabweiser nach wenigstens einem der vorstehenden Ansprüche,
**dadurch gekennzeichnet, dass** das Dichtelement (13) als eine Profildichtung ausgebildet ist.

4. Windabweiser nach Anspruch 3,
**dadurch gekennzeichnet, dass** die Profildichtung (112) einen offenen Abschnitt und/oder einen geschlossenen Abschnitt aufweist.

5. Windabweiser nach wenigstens einem der vorstehenden Ansprüche,
**dadurch gekennzeichnet, dass** das Dichtelement (13) Moosgummi und/oder EPDM und/oder Silikon aufweist.

6. Windabweiser nach wenigstens einem der vorstehenden Ansprüche,
**dadurch gekennzeichnet, dass** das Dichtelement (13) bei geschlossener Dachöffnung (42) und/oder wenigstens teilweise freigegebener Dachöffnung (42) mit dem beweglichen Dachteil (3) wenigstens teilweise abdichtend in Kontakt steht und/oder eine vibrationsdämpfende Einrichtung zwischen dem Ausstellelement (11) und dem beweglichen Dachteil (3) ausbildet.

7. Windabweiser nach wenigstens einem der vorstehenden Ansprüche,
**dadurch gekennzeichnet, dass** das Dichtelement (13) bei wenigstens teilweise freigegebener Dachöffnung (42) mit einem vorderen Dachflansch (43) eines Dachrands in Kontakt bringbar ist und dass das Dichtelement (13) derart ausgebildet ist, dass der Dachrand bei wenigstens teilweise freigegebener Dachöffnung (42) geräuscharm von dem Fahrtwind (6) überströmt ist.

8. Windabweiser nach wenigstens einem der vorstehenden Ansprüche,
**dadurch gekennzeichnet, dass** das Ausstellelement (11) mit dem Dichtelement durch einen Klebstoff und/oder durch einen Stoffschluss mittels Anspritzen des Dichtelements (13) und/oder durch eine Einsteckverbindung und/oder durch eine Aufsteckverbindung und/oder durch eine Klemmverbindung und/oder durch eine Verkeilverbindung und/oder durch eine Spreizverbindung und/oder durch eine Klammerverbindung und/oder durch eine Rastverbindung verbunden ist.

9. Windabweiser nach wenigstens einem der vorstehenden Ansprüche,
**dadurch gekennzeichnet, dass** das Ausstellelement (11) als ein Profilteil ausgebildet ist.

10. Windabweiser nach Anspruch 9,
**dadurch gekennzeichnet, dass** das Profilteil (112) als Kunststoffprofilteil und/oder Aluminiumstrangpressprofilteil und/oder Magnesiumdruckgussteil ausgebildet ist.

11. Verfahren zur Montage des Windabweisers (1) gemäß einem der vorstehenden Ansprüche, wenigstens aufweisend folgende Schritte:
- Verbinden des als Gewebe und/oder luftdurchlässige Folie ausgebildeten Abweiserelements (12) mit dem Dichtelement (13) durch Nähen und/oder Kleben und/oder Verschweißen und/oder Verklemmen und/oder Anspritzen des Dichtelements (13) an das Abweiserelement (12);
- Anbringen des Dichtelements (13) an dem Ausstellerelement (11) durch Kleben und/oder durch Anspritzen des Dichtelements (13) an das Ausstellelement (11) und/oder Einstecken und/oder durch eine Aufstecken und/oder durch Klemmen und/oder durch eine Verkeilen und/oder durch eine Spreizen und/oder durch eine Klammern und/oder durch eine Rasten.

## Claims

1. Wind deflector (1) for a vehicle roof opening (42) which can be closed and can be partially opened up by means of a moveable roof part (3),
- with a bow-shaped base element (10) which is fitted in a roof opening edge region (41) of the motor vehicle,
- with a bow-shaped deployment element (11) which is arranged above the base element (10) and is fitted in a manner such that it can pivot with respect to the base element (10),
- with a deflector element (12) which is arranged between the base element (10) and the deployment element (11), can be stretched open, and is designed as a fabric and/or air-permeable film,
- with at least one sealing element (13), which is fastened to the deployment element (11), for reducing driving noises,
**characterized in that** the deflector element (12) is fastened directly to the sealing element (13).

2. Wind deflector according to Claim 1, **characterized in that** the sealing element (13) is connected to the deflector element (12) by a seam and/or an adhesive and/or a weld seam and/or a clamping connection and/or a cohesive material joint by the sealing element (13) being injection-moulded on.

3. Wind deflector according to at least one of the preceding claims, **characterized in that** the sealing element (13) is designed as a profile seal.

4. Wind deflector according to Claim 3, **characterized in that** the profile seal (112) has an open section and/or a closed section.

5. Wind deflector according to at least one of the preceding claims, **characterized in that** the sealing element (13) has microcellular rubber and/or EPDM and/or silicone.

6. Wind deflector according to at least one of the preceding claims, **characterized in that**, when the roof opening (42) is closed and/or the roof opening (42) is at least partially opened up, the sealing element (13) is in contact with the moveable roof part (3) in at least partially sealing manner and/or forms a vibration-damping device between the deployment element (11) and the moveable roof part (3).

7. Wind deflector according to at least one of the preceding claims, **characterized in that**, when the roof opening (42) is at least partially opened up, the sealing element (13) can be brought into contact with a front roof flange (43) of a roof edge, and **in that** the sealing element (13) is designed in such a manner that, when the roof opening (42) is at least partially opened up, the relative wind (6) flows over the roof edge with little noise.

8. Wind deflector according to at least one of the preceding claims, **characterized in that** the deployment element (11) is connected to the sealing element by an adhesive and/or by a cohesive material joint by means of the sealing element (13) being injection-moulded on and/or by a plug-in connection and/or by a plug-on connection and/or by a clamping connection and/or by a wedged connection and/or by an expanding connection and/or by a clip connection and/or by a latching connection.

9. Wind deflector according to at least one of the preceding claims, **characterized in that** the deployment element (11) is designed as a profile part.

10. Wind deflector according to Claim 9, **characterized in that** the profile part (112) is designed as a plastic profile part and/or aluminium extruded profile part and/or magnesium die cast part.

11. Method for installing the wind deflector (1) according to one of the preceding claims, at least having the following steps:
- connecting the deflector element (12), which is designed as a fabric and/or air-permeable film, to the sealing element (13) by sewing and/or adhesive bonding and/or welding and/or clamping and/or injection-moulding the sealing element (13) onto the deflector element (12);
- attaching the sealing element (13) to the deployment element (11) by adhesive bonding and/or by injection-moulding of the sealing element (13) onto the deployment element (11) and/or by plugging it in and/or by plugging on and/or by clamping and/or by wedging and/or by expansion and/or by clipping and/or by latching.

## Revendications

1. Déflecteur (1) pour une ouverture de toit (42) d'un véhicule, pouvant être fermée et partiellement ouverte au moyen d'une partie de toit mobile (3),
- avec un élément de base (10) en forme d'étrier, qui est installé dans une région de bord (41) de l'ouverture de toit du véhicule automobile,
- avec un élément dépliable (11) en forme d'étrier, disposé au-dessus de l'élément de base (10), qui est installé de façon pivotante par rapport à l'élément de base (10),
- avec un élément de déflecteur (12) extensible, disposé entre l'élément de base (10) et l'élément dépliable (11), qui se présente sous la forme d'une toile ou d'une feuille perméable à l'air,
- avec au moins un élément d'étanchéité (13) fixé sur l'élément dépliable (11) pour réduire les bruits de roulage,
**caractérisé en ce que** l'élément de déflecteur (12) est fixé directement sur l'élément d'étanchéité (13).

2. Déflecteur selon la revendication 1, **caractérisé en ce que** l'élément d'étanchéité (13) est assemblé à l'élément de déflecteur (12) par une couture et/ou un adhésif et/ou une soudure et/ou un assemblage pincé et/ou par complémentarité de matière par projection de l'élément d'étanchéité (13).

3. Déflecteur selon au moins une des revendications précédentes, **caractérisé en ce que** l'élément d'étanchéité (13) est formé par un joint d'étanchéité profilé.

4. Déflecteur selon la revendication 3, **caractérisé en ce que** le joint d'étanchéité profilé (112) présente une partie ouverte et/ou une partie fermée.

5. Déflecteur selon au moins une des revendications précédentes, **caractérisé en ce que** l'élément d'étanchéité (13) comprend du caoutchouc mousse et/ou du EPDM et/ou de la silicone.

6. Déflecteur selon au moins une des revendications précédentes, **caractérisé en ce que** l'élément d'étanchéité (13) est en contact de façon au moins partiellement étanche avec la partie de toit mobile (3) lorsque l'ouverture de toit (42) est fermée et/ou lorsque l'ouverture de toit (42) est au moins partiellement ouverte, et/ou forme un dispositif d'amortissement des vibrations entre l'élément dépliable (11) et la partie de toit mobile (3).

7. Déflecteur selon au moins une des revendications précédentes, **caractérisé en ce que** l'élément d'étanchéité (13) peut être mis en contact avec une bride de toit avant (43) d'un bord de toit lorsque l'ouverture de toit (42) est au moins partiellement ouverte et **en ce que** l'élément d'étanchéité (13) est réalisé de telle manière que le bord de toit soit balayé sans bruit par le vent de roulage (6) lorsque l'ouverture de toit (42) est au moins partiellement ouverte.

8. Déflecteur selon au moins une des revendications précédentes, **caractérisé en ce que** l'élément dépliable (11) est assemblé à l'élément d'étanchéité par un adhésif et/ou par complémentarité de matière par projection de l'élément d'étanchéité (13) et/ou par un assemblage embroché et/ou par un assemblage emboîté et/ou par un assemblage pincé et/ou par un assemblage coincé et/ou par un assemblage expansé et/ou par un assemblage agrafé et/ou par un assemblage à crans.

9. Déflecteur selon au moins une des revendications précédentes, **caractérisé en ce que** l'élément dépliable (11) se présente sous la forme d'une pièce profilée.

10. Déflecteur selon la revendication 9, **caractérisé en ce que** la pièce profilée (112) est formée par une pièce profilée en matière plastique et/ou une pièce profilée extrudée en alliage d'aluminium et/ou une pièce en magnésium coulée sous pression.

11. Procédé pour le montage du déflecteur (1) selon l'une quelconque des revendications précédentes, comprenant au moins les étapes suivantes :
- assembler l'élément de déflecteur (12) se présentant sous la forme d'une toile et/ou d'une feuille perméable à l'air avec l'élément d'étanchéité (13) par couture et/ou collage et/ou soudage et/ou pinçage et/ou projection de l'élément d'étanchéité (13) sur l'élément de déflecteur (12);
- appliquer l'élément d'étanchéité (13) sur l'élément dépliable (11) par collage et/ou projection de l'élément d'étanchéité (13) sur l'élément dépliable (11) et/ou par embrochage et/ou par emboîtement et/ou par pinçage et/ou par coinçage et/ou par expansion et/ou par agrafage et/ou par encliquetage.
